**Europäisches Patentamt**

**European Patent Office**

**Office européen des brevets**

(19)

(11) Numéro de publication: **0 222 641 B1**

# FASCICULE DE BREVET EUROPEEN

(12)

(45) Date de publication du fascicule du brevet:
**28.11.90**

(51) Int. Cl.⁵: **H04N 5/335, H04N 5/243**

(21) Numéro de dépôt: **86402237.1**

(22) Date de dépôt: **09.10.86**

(54) **Nouveaux dispositifs d'obturation électronique.**

(30) Priorité: **28.10.85 FR 8515974**

(43) Date de publication de la demande:
**20.05.87 Bulletin 87/21**

(45) Mention de la délivrance du brevet:
**28.11.90 Bulletin 90/48**

(84) Etats contractants désignés:
**AT BE CH DE ES GB GR IT LI LU NL SE**

(56) Documents cités:
**EP-A- 0 087 284**
**EP-A- 0 093 077**
**EP-A- 0 095 541**
**FR-A- 2 384 407**
**GB-A- 2 083 968**
**US-A- 4 475 131**

**TOUTE L'ELECTRONIQUE,**
**no. 495, juin-juillet 1984, pages 35-40, Paris, FR;**
**"Imagerie numérique: Caméra linéaire, à transfert de charges"**

(73) Titulaire: **IMAGERIE INDUSTRIE SYSTEME Société Anonyme dite: I2S, 239 rue du Jardin Public, F-33000 Bordeaux(FR)**

(72) Inventeur: **Pinson, Yannick, 99 rue Fondaudege, F-33000 Bordeaux(FR)**
Inventeur: **Ricros, Alain, 99 rue Fondaudege, F-33000 Bordeaux(FR)**

(74) Mandataire: **Hirsch, Marc-Roger, Cabinet Hirsch 34 rue de Bassano, F-75008 Paris(FR)**

## Description

La présente invention a pour objet de nouveaux dispositifs de commande d'appareillages de prise d'image à capteurs photosensibles à l'état solide. Plus généralement, elle concerne l'obturation électronique et ses applications à tous appareillages de prise d'image unique ou multiple ou de séries d'images, à déclenchement et/ou durée d'ouverture et/ou de lecture programmables et/ou réglables. En particulier, elle s'applique à des systèmes de contrôle et/ou de surveillance optoélectroniques dont les informations sont destinées à être mises en mémoire et/ou traitées et/ou affichées.

Le contrôle et la surveillance opto-électroniques sont de plus en plus fréquents mais posent de nombreux problèmes lorsque, surtout dans les industries de production à hautes cadences, on veut détecter automatiquement des anomalies présentées par des objets circulant, par exemple, à grande vitesse, à cadence élevée, à fréquence irrégulière ou encore à luminosité aléatoire.

La grande vitesse de circulation entraîne par exemple sur de nombreux appareils de prise d'images et notamment sur caméras vidéo classiques des déformations des objets observés; la cadence élevée est généralement incompatible avec des standards vidéo ou équivalents dont le nombre d'images par unité de temps peut être insuffisant; l'irrégularité de fréquence d'apparition des objets dans le champ d'observation apporte de nombreuses perturbations et notamment des images irrégulières, voire partielles ou l'absence de l'objet dans le champ de prise de vue. De plus, des variations de diverses conditions optiques (luminosité, transparence essentiellement) en plus des irrégularités cinématiques ci-dessus exposées, créent des difficultés supplémentaires lorsqu'on cherche à analyser des images que l'on souhaite aussi régulières que possible.

L'invention a donc notamment pour but d'obtenir avec un même matériel soit des images au coup par coup les plus nettes et les plus régulières possible, soit des images en continu (au sens cinématographique du terme). Pour schématiser, on pourrait dire que, selon l'invention, on cherche à recueillir des images de type stroboscopique mais à fréquences et conditions de prises de vues adaptées à l'apparition dans le champ de chaque objet à observer, ces images étant transformées en informations pouvant au fur et à mesure être mises en mémoire et/ou traitées et/ou affichées.

Grâce à de tels dispositifs conformes à l'invention, il devient possible de déclencher une prise d'image à l'instant voulu, de régler la durée d'ouverture de l'obturateur le temps voulu, de déclencher la lecture à l'instant voulu et de lire pendant le temps voulu, ce qui permet des prises d'image instantanées uniques ou simultanées ou des prises de séries d'images à cadence irrégulière et, dans tous les cas, (prises uniques ou en séries) à durée d'ouverture et à vitesse de lecture variables. On peut ainsi suivre tout programme de déclenchement et d'obturation. Il devient ainsi possible par exemple de surveiller une sortie de fabrication à cadence très élevée et à fréquence irrégulière, tout en détectant les malfaçons et plus généralement toutes anomalies, le système permettant automatiquement, par exemple, de déclencher une alarme, et/ou de commander la mise à l'écart des objets non conformes, et/ou de calculer des données statistiques sur la qualité de la fabrication. Or, on comprend que si généralement, la cadence est nettement plus lente que le nombre d'images par unité de temps d'une caméra classique, on se heurte à des problèmes complexes dès que le débit augmente. Surveiller le moulage à grande vitesse de pièces plastiques, l'estampage à grande vitesse de pièces métalliques, l'impression à grande vitesse de papier ou de tissu ne sont que des domaines parmi tant d'autres où l'invention trouve son application, encore que dans certains cas, si les cadences sont élevées, elles sont régulières ce qui réduit légèrement l'importance des problèmes. L'invention trouvera encore plus son application si les fréquences sont aléatoires et si, comme on l'a souligné plus haut, les conditions mécaniques et optiques varient d'un objet à l'autre. Il est ainsi possible de réduire le temps d'ouverture en lumière forte ou lorsque la scène est rapide et inversement, ce qui constitue des critères de base d'un obturateur électronique. Il devient également possible suivant le type d'utilisation (cadrage par fenêtre, sous-échantillonnage, par exemple), d'accélérer la lecture de l'image. On trouve également une application très intéressante dans la commande de plusieurs caméras, ce qui peut permettre, notamment dans le cas de la surveillance, de déclencher simultanément l'ouverture et donc la prise d'image sur toutes les caméras et d'effectuer séquentiellement les lectures. L'homme de l'art peut imaginer sur cette base de nombreuses autres combinaisons.

Le problème du contrôle d'objets à caractéristiques aléatoires a déjà été abordé de façon très limitée pour le contrôle des bouteilles et autres objets de verre dans la demande de brevet européen EP-A 0 095 541 (RICROS et al).

Cette demande décrit un dispositif et un procédé d'inspection automatique par contraste de transparence dans lesquels des caméras à dispositifs photosensibles matriciels ou linéaires sont associées à des registres à décalage et à des registres par point de façon à pondérer les points entourant un point donné, la comparaison entre le niveau pondéré dudit point et de celui de ses voisins étant réalisée grâce à un additionneur relié aux sorties binaires des registres par point, la sortie de l'additionneur étant connectée à une entrée d'un comparateur relié par son autre entrée à une source de signal délivrant une valeur programmable et par sa sortie à un compteur.

Cette invention antérieure était donc orientée vers la solution d'un problème spécifique et restreint et ne donnait pas au matériel, présentant par ailleurs des dispositifs mécaniques spécifiques, la polyvalence souhaitée.

On remarquera, par ailleurs, que l'évolution technique actuelle met à la disposition de l'industrie une large variété de capteurs opto-électroniques tels que par exemple les capteurs de type CTD (CHARGE TRANSFER DEVICE) à transfert de charges dans lesquels des photons frappant un point photosensible voient leur énergie transformée en charges électriques.

Dans ce qui suit et pour fixer les idées, on se référera essentiellement à ces capteurs CTD et plus particulièrement aux capteurs de type CCD (CHARGE COUPLED DEVICE), bien que la présente invention puisse s'appliquer à tout dispositif de capteur opto-électronique où l'énergie lumineuse reçue en chaque point est transformée en information électro- nique (en général un signal) susceptible de mise en mémoire, de traitement, d'affichage ou de toute autre opération basée sur l'image électronique ainsi constituée par l'ensemble des informations correspondant à chaque point de l'image.

Dans ce qui suit, on utilisera par commodité le vocabulaire généralement adopté dans le domaine des capteurs CTD et en particulier CCD. Il s'agit d'ensemble de capteurs ponctuels le plus souvent formés de cellules de type MOS (Metal Oxide Semiconductor). Ces capteurs sont généralement montés selon des matrices dans des dispositifs de prise de vue ci-après dénommés pour simplifier "caméras", chaque cellule élémentaire émettant une quantité d'électricité proportionnelle au flux lumineux reçu, ce qui permet la réalisation d'images électroniques définies cellule par cellule et donc point par point. Chacun de ces points est nommé "pel" (point élémentaire) ou "pixel" (PICTURE ELEMENT) et l'intensité lumineuse correspondante traduit l'énergie de chacun des photons atteignant la cellule photosensible sous forme de charges correspondant à l'apparition des paires électron-trou. L'ensemble matriciel ou linéaire de ces cellules photosensibles constitue ce que l'on appelle ci-après la zone d'intégration ZI, c'est-à-dire la zone où l'image optique projetée sur l'ensemble des cellules se transforme en image électronique.

Une zone de lecture ZL non photosensible est associée à la précédente, zone dans laquelle l'image électronique formée dans la zone ZI est transférée. On notera que la zone ZI peut être décomposée en zones élémentaires de type ZI par exemple en colonnes associées chacune à une zone élémentaire de type ZL. Dans le cas de la zone ZI couvrant l'ensemble de l'image en un seul block, la zone ZL peut être contiguë. Dans le cas de la zone ZI décomposée par exemple en colonnes, on peut alterner colonnes de type ZI et colonnes de type ZL et couvrir ainsi l'ensemble de l'image. On peut, de façon analogue, raisonner par lignes.

Les informations électroniques correspondant à chaque pel sont transmises pel par pel, et/ou ligne ou colonne par ligne ou colonne, et/ou trame par trame, et/ou image par image de la zone ZI (unique ou divisée) à la zone ZL (unique ou divisée) et ensuite à des registres pour mise en mémoire et/ou traitement et/ou affichage. On soulignera, surtout si l'on cherche à visualiser sur écran cathodique, ce qui nécessite la compatibilité avec les standards de télévision, qu'il est généralement fait appel à l'entrelacement des lignes c'est-à-dire à la décomposition de l'image en une trame de lignes impaires et une trame de lignes paires, d'où l'introduction ci-dessus de la notion de trame. Electroniquement parlant, chaque pel se traduit donc par une impulsion dont l'amplitude est sensiblement proportionnelle au flux lumineux correspondant. Des trains d'impulsions correspondent donc aux lignes, le cas échéant aux trames, et aux images.

Le principal intérêt de ces capteurs à transfert de charges réside, outre leur simplicité, leur état solide et leur faible volume, dans la souplesse de leur utilisation. Cependant, l'invention ne saurait se limiter à ce type de capteur. En effet, elle s'applique à tout système dans lequel un ou plusieurs capteurs transforment point par point l'énergie lumineuse en énergie électrique, ces capteurs ponctuels étant indépendants et/ou associés par lignes ou colonnes et/ou associés en matrices (généralement cartésiennes).

Dans un article publié dans la revue "Toute l'Electronique" No 495, juin-juillet 1984 pages 35–40 intitulé "Caméra linéaire, à transfert de charges", le demandeur a décrit une gamme de caméras, généralement à base de capteurs à photodiodes et de registres de lecture à transfert de charges, permettant un fonctionnement en "mode fréquence" dans lequel la durée d'exposition est égale au temps de lecture d'une ligne complète, ou en "mode temps" ou "monocoup", dans lequel le temps d'intégration est selectionnable de 1,6 à 3 600 ms, indépendamment de la fréquence de lecture des pixels. Dans de telles caméras, les registres de lecture sont lus en permanence à une fréquence sélectionnable entre plusieurs valeurs, ou contrôlable par une tension ou un signal d'horloge externe.

Dans de telles caméras de l'art antérieur, il n'était cependant pas possible de commander la lecture à l'instant voulu, en d'autres termes à l'instant où le dispositif de traitement de l'image est prêt à recevoir l'image. La possibilité d'effectuer la lecture à l'instant voulu représente cependant un grand avantage, surtout dans le cas d'un analyse de l'image où il y a utilisation de fenêtrage ou de sous-échantillonnage, mais également dans le cas d'utilisation de plusieurs caméras, par exemple quatre, chacune prenant une image simultanée ou séquentielle d'angle différent ou identique d'un objet. Dans ce cas, au lieu d'être obligé à fournir par exemple, quatre entrées séparées sur le dispositif d'analyse, il suffit de fournir une seule entrée et de valider la lecture de l'image de chaque caméra en séquence, à l'instant voulu, ce qui implique une réduction notable du prix du dispositif de traitement.

La présente invention a donc essentiellement pour objet un dispositif de commande d'un appareillage de prise d'images à capteurs optoélectroniques (CTD), intégrable dans une caméra ou un ensemble de caméras de prise d'images d'objets fixes ou mobiles, ces capteurs présentant au moins une zone de prise d'images, dite "d'intégration" (ZI), constituée d'éléments photosensibles et au moins une zone de mémoire et de lecture (ZL) recueillant les signaux émis par les éléments sensibles pour les mémoriser et/ou les traiter.

Selon l'invention le dispositif comporte un ensemble logique (TTL), qui après réception depuis l'extérieur d'un ordre de prise d'image à un instant défini par un événement externe, commande le début d'une phase d'intégration ou d'exposition, asservit le temps d'exposition aux caractéristiques physiques de l'objet et, à la réception depuis l'extérieur d'un ordre de lecture à un instant défini par des moyens de traitement extérieur de l'image, commande l'opération de lecture de ladite zone de mémoire à l'instant et au rythme définis par lesdits moyens de traitement.

De préférence, les moyens de traitement extérieur de l'image déclenchent l'ordre de lecture soit à l'instant où ils sont prêts à recevoir une image ou un élément d'image, soit, afin de réaliser un traitement ou un affichage à une fréquence vidéo normalisée, à un rythme régulier correspondant à ladite fréquence normalisée.

De préférence, l'ensemble logique commande, avant le début de la phase d'intégration, au moins une remise à zéro (RAZ) de la zone d'intégration et/ou au moins une remise à zéro de la zone de mémoire avant le transfert de la zone d'intégration vers ladite zone de mémoire.

Dans ces dispositifs, les capteurs photosensibles sont, de préférence, à transfert de charge, les signaux étant transmis selon les modes choisis, image par image, et/ou trame par trame, et/ou colonne ou ligne par colonne ou ligne et/ou point par point.

L'ordre de prise d'image est déclenché manuellement ou automatiquement (par exemple par programme, par capteur) indiquant que les objets à prendre en images sont en condition optimale (position, éclairement, transparence) soit dans l'absolu, soit par comparaison à des références ou aux objets précédemment pris en image.

La durée de prise d'image est commandée à partir de capteurs tenant compte des conditions (éclairage, position des objets, vitesse de déplacement) de façon à optimiser la qualité de l'image, c'est-à-dire une bonne netteté tout en gardant un bon contraste.

Il est évident que la commande directe ou indirecte, mais séparée et successive des opérations des deux phases essentielles ci-dessus indiquées (intégration et lecture) et des phases subséquentes éventuelles permet d'échapper à un standard rigide, comme c'est le cas en télévision, et d'adapter la fréquence des images à celle des objets à observer. On peut ainsi obtenir, par exemple sur un affichage vidéo classique, une image par objet prise au coup par coup, bien centrée, non déformée, nette et précise; ceci permet donc, bien évidemment, de déclencher tout opération dès qu'apparaît une anomalie par comparaison aux autres images ou à une image de référence.

La modulation et l'asservissement du déclenchement et de la durée des opérations permet donc un rendement optimal de la qualité par rapport à la durée. Selon la nature des capteurs utilisés, on pourra déclencher successivement et alternativement intégration et lecture, ou passer plus rapidement d'une intégration à l'autre si la lecture d'une image ou d'une trame peut s'effectuer pendant l'intégration de l'image ou de la trame suivante. On peut également assurer le déclenchement et asservir les durées d'opérations aux fenêtres et aux sous-échantillonages.

L'arrêt de la phase d'intégration peut se faire de différentes façons: par occultation, par suppression de l'éclairement de l'objet, par rupture du faisceau lumineux entre objet et capteur, par commande de désexcitation des capteurs, etc. Si on le désire, il est évident qu'un tel système peut être utilisé comme pour une caméra classique, c'est-à-dire avec des prises d'images successives à rythme régulier. Mais on peut dans ce cas encore garder le reste des réglages automatiques, par exemple, pour compenser des variations d'éclairement.

Dans le cas plus particulier des capteurs à transferts de charge et notamment des capteurs de type CCD, on peut ainsi déclencher l'intégration dans la zone ZI au moment voulu, de programmer le temps d'intégration TI en fonction des caractéristiques de l'objet ou du sujet à prendre en vue, de donner l'ordre de transfert des informations relatives à l'image électronique de ZI vers ZL à la fin du temps TI puis de ZL vers les registres à l'instant et au rythme voulu. TI peut donc varier d'une prise d'image à la suivante. On peut ainsi consacrer à l'intégration le temps nécessaire pour obtenir une bonne qualité d'image (ce qui est difficile avec les appareillages classiques, par exemple lorsqu'on veut surveiller ou contrôler des objets se déplaçant à vitesse importante). Cette intégration est déclenchée au moment voulu, ce qui permet d'obtenir des images régulières même pour des objets à apparition ou mouvements irréguliers. Quant au traitement des résultats, il peut être mené à la cadence de l'équipement et en particulier du calculateur qui vide le registre et qui reçoit des information correspondant à des images de bonne qualité.

De tels dispositifs conformes à l'invention permettent donc aussi bien le travail en continu qu'au coup par coup, et s'appliquent donc à la cinématographie et à de la photographie à déclenchement et à obturation programmables, c'est-à-dire en salves ou en coups isolés ou encore à la prise de vue sur plusieurs appareils ou caméras.

L'un des problèmes que l'on peut également résoudre est celui de la compatibilité avec des dispositifs vidéo, notamment si l'on veut visualiser sur écran cathodique classique ou encore enregistrer sur support magnétique vidéo classique. Il faut alors assurer la synchronisation entre les divers éléments par tout moyen classique grâce à un ou plusieurs générateurs d'impulsions verrouillés (genlocked), ce qui assure la stabilité surtout si l'on utilise plusieurs caméras et que l'on passe de l'une à l'autre. C'est toujours le cas lorsqu'on travaille en continu pour synchroniser caméra, mémoire image, visualisation ou autres éléments constitutifs. Dans le cas du coup par coup, comme on le verra ci-après, le problème se pose différemment.

Dans tous les cas, les systèmes d'accès séparé aux commandes des zones d'intégration ZI et de lecture ZL constituent une caractéristique essentielle de l'invention.

Pour mieux faire comprendre les caractéristiques techniques et les avantages de la présente invention, on va en décrire des exemples de réalisation, étant bien entendu que ceux-ci ne sont pas limitatifs quant à leur mode de mise en œuvre et aux applications qu'on peut en faire. On se référera aux figures suivantes qui représentent schématiquement:

- la figure 1 une caméra fonctionnant au coup par coup et ses circuits associés;
- la figure 2 un chronogramme de fonctionnement du dispositif de la figure 1;
- la figure 3 une simplification de la figure 1;
- la figure 4 une caméra reprenant les éléments principaux des figures 1 et 3 adaptées pour fournir des signaux vidéo composites.

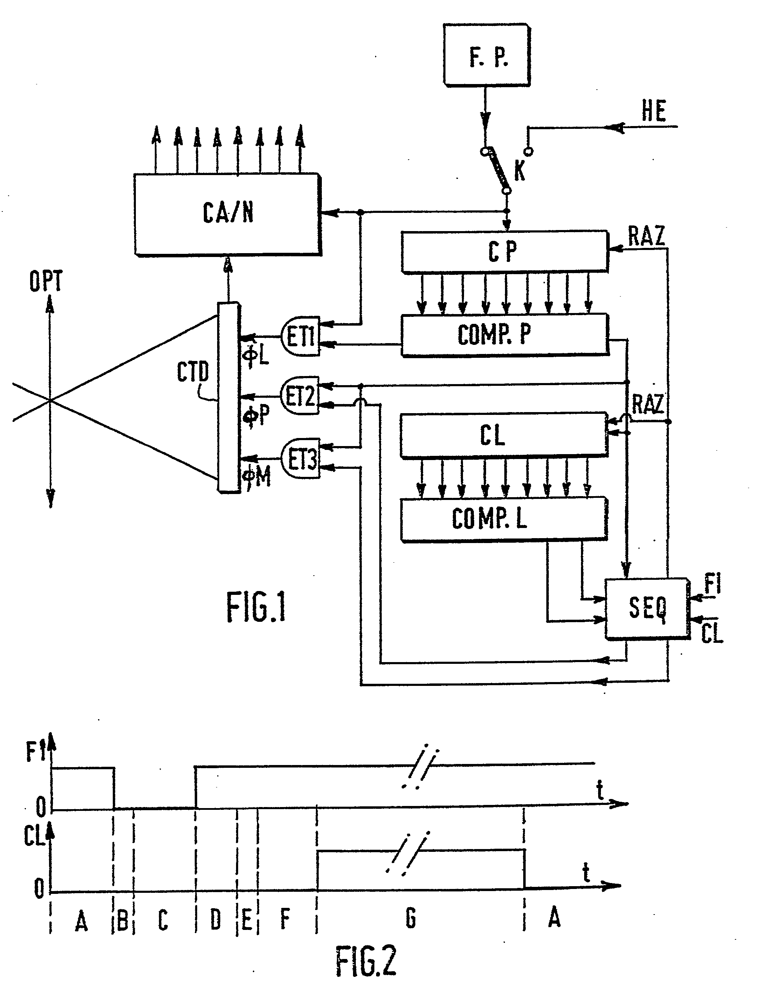

La figure 1 représente schématiquement un ensemble de commande de capteur à transfert de charges tel qu'un capteur CCD permettant le fonctionnement au coup par coup. Cet ensemble reçoit les impulsions soit de fréquence de points du générateur-horloge FP, soit d'une horloge externe HE qui peut par exemple synchroniser la sortie information de chaque pel, la sélection entre horloges se faisant grâce au commutateur K. Les impulsions de fréquence points FP ou de fréquence externe sont amenées d'une part au compteur de points CP et d'autre part à l'une des entrées d'une première porte ET (ET1). Le compteur de points CP (de 0 à 511, par exemple) est suivi d'un ensemble comparateur COMP.P qui émet un signal à chaque fin de ligne vers de première part, une entrée d'une seconde porte ET (ET2) et d'une troisième porte ET (ET3), de seconde part un compteur de ligne CL et de troisième part un séquenceur d'états SEQ. Ceci correspond à l'information de fin de ligne et de commencement de la suivante. Le séquenceur d'états SEQ renvoie au compteur de points CP une impulsion de remise à zéro RAZ pour retour au début de la nouvelle ligne. Le compteur de lignes CL (de 0 à 511, par exemple) est suivi d'un ensemble comparateur COMP.L qui informe le séquenceur d'états du transfert d'un certain nombre de lignes et en particulier de l'ensemble de l'image (fin d'une image et début de la suivante). Le séquenceur d'états SEQ, en retour, remet à zéro (RAZ) l'ensemble comparateur de lignes COMP.L pour retour en début de nouvelle image.

Dans le présent exemple, on traite d'images composées de lignes et de points sans intermédiaire de trame. Il est évident que l'on peut de façon équivalente compter des lignes impaires, changer de trame, compter les lignes paires, changer de trame et ainsi de suite notamment dans le cas de l'adaptation à un affichage vidéo classique.

Le séquenceur d'états SEQ reçoit d'une part en FI l'information de commande de déclenchement de la prise d'image, en synchronisation avec l'événement défini par tout moyen adéquat (capteur de position de l'objet par exemple) et d'autre part, en CL, l'information de commande de lecture, en synchronisation avec l'organe de traitement, c'est-à-dire l'ensemble calculateur y compris convertisseur analogique/numérique, mémoires et autres éléments constitutifs adéquats.

Les trois portes ET reçoivent respectivement sur leur seconde entrée les signaux de validation suivants:
- pour la porte ET1, provenant de l'ensemble comparateur COMP.P, ladite porte émettant les signaux ØL de décalage de points du registre de lecture,
- pour la porte ET2, provenant du séquenceur d'états SEQ, ladite porte émettant les signaux ØP de décalage des lignes de la zone image,
- pour la porte ET3, provenant du séquenceur d'états SEQ, ladite porte émettant les signaux ØM de décalage des lignes de la zone mémoire.

Ces signaux ØL, ØP et ØM assurent la commande de l'ensemble capteur à transfert de charges CTD ou équivalent.

Le dispositif capteur à transfert de charges CTD ou équivalent est disposé pour recevoir l'image de l'objet grâce à l'optique OPT. A la sortie de ce dispositif, les signaux sont amenés à un ensemble convertisseur analogique/numérique (CA/N) recevant par ailleurs les signaux de fréquence de points FP du générateur interne ou la fréquence correspondante du générateur externe.

A la sortie de ce convertisseur CA/N, on dispose donc de signaux binaires correspondant à chaque pel, que l'on peut mettre en mémoire, développer, traiter dans un calculateur, afficher, copier, télécopier utiliser pour des opérations de production d'image, ainsi que toutes opérations traitant ces images ou déclenchées à partir de ces images comme celle de de tri, de commande, de régulation ou plus généralement toutes opérations basées sur l'interprétation d'images.

En se reportant à la figure 2 qui représente un chronogramme de fonctionnement du dispositif de la figure 1, le séquenceur d'états SEQ travaille dans les conditions suivantes:
- Lorsque FI = 1 et CL = 0, le capteur CTD se trouve en attente d'intégration A.
- Lorsque FI passe à 0, on commande le transfert rapide de la zone image ZI à la zone mémoire ZM (remise à zéro de l'image en B) puis l'intégration de la lumière dans la zone image (en C).
- Lorsque FI revient à 1, on commande la remise à zéro de la zone mémoire (en D) puis le transfert de la zone image vers la zone mémoire (fin réelle d'intégration) en E; on se trouve alors en attente de la commande de lecture CL (en F).
- Lorsque CL passe de 0 à 1, on démarre les phases de lecture de la zone mémoire à travers le registre de sortie du capteur CTD.
- A la fin de chaque ligne, on vérifie que CL est toujours égal à 1.
Si CL est revenu à 0, on interrompt les transferts de lecture tout en finissant la lecture de la ligne en cours. Si CL passe à nouveau à 1, on autorise la lecture des lignes suivantes (en G).
Après lecture de l'ensemble des lignes, on revient en phase A d'attente d'intégration.
On notera que selon la constitution du capteur, on peut travailler ligne par ligne ou colonne par colonne si des zones linéaires d'intégration alternent avec des zones linéaires de lecture, ou encore trame par trame ou image par image si les zone d'intégration et de lecture couvrent respectivement l'ensemble d'une trame ou d'une image.

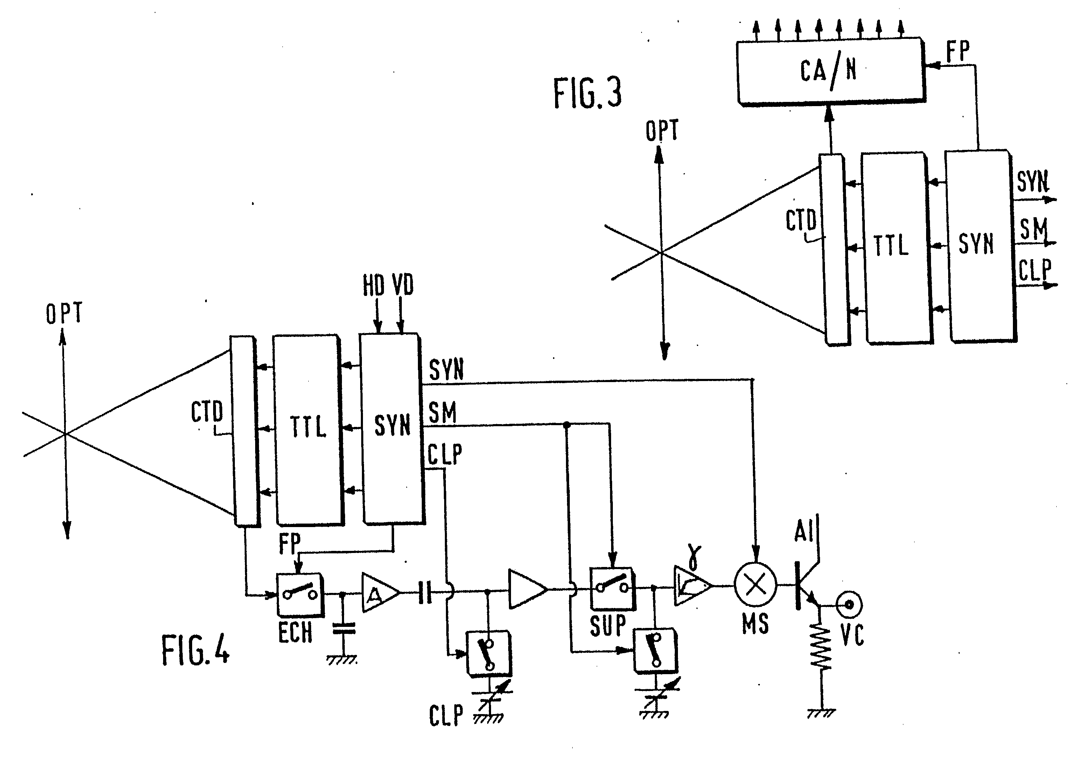

Le dispositif de la figure 1 peut donc se résumer à une optique OPT, un capteur CTD, un convertisseur CA/N traitant les informations qui en sont issues et une logique, pouvant être de type TTL ou autre, commandée par un ensemble générateur de synchronisation SYN. Ceci peut être schématisé comme représenté à la figure 3.

On peut, à partir des mêmes éléments de base, définir les nouveaux éléments nécessaires pour aboutir à une sortie vidéo composite, comme on le verra en se reportant à la figure 4.

Sur la figure 3, on retrouve donc l'optique OPT, le capteur CTD et le convertisseur CA/N de la figure 1, le reste étant constitué par la logique TTL ou autre, par exemple de type MOS, et par le générateur de synchronisation SYN. Ce dernier est connecté à l'éventuel GEN-LOCK d'une autre caméra ou de tout autre élément constitutif de l'ensemble vidéo (ce qui se traduit par exemple par les signaux de déflexion horizontale HD et verticale VD). Le générateur émet les signaux classiques vers d'autres éléments, tels que SM, SYN, CLP (niveau de gris) et ceux nécessaires au fonctionnement de l'ensemble TTL + CTD, le convertisseur CA/N recevant les signaux de fréquence point FP.

A la figure 4, on retrouve donc l'optique OPT, le capteur CTD, la logique TTL de préférence MOS et le générateur SYN.

Les signaux issus du capteur CTD sont échantillonnés en ECH à la fréquence point FP. En aval, un amplificateur A associé à deux condensateurs est suivi d'un circuit de niveau de noir CLP en relation avec le générateur de synchronisation SYN, suivi d'un circuit de suppression SUP, d'un correcteur de γ d'un mélangeur de synchronisation MS et d'un adaptateur d'impédance A1 pour aboutir à une sortie VC vidéo composite; suppresseur SUP et mélangeur MS sont connectés de façon classique au générateur de synchronisation.

On peut grâce au schéma de la figure 4 utiliser les éléments constitutifs essentiels de la caméra coup par coup des figures 1 et 3 en caméra à sortie vidéo, ce qui permet un affichage et un enregistrement classiques.

On notera que dans le cas des dispositifs automatiques de surveillance, il est également possible, du fait de la prise en compte de conditions physiques, optiques, cinématiques ou autres totalement aléatoires, de trouver des applications dans des domaines où actuellement il faut changer d'équipement. C'est le cas par exemple pour la surveillance de jour et de nuit où les équipements peuvent être très différents selon les techniques classiques. Avec les dispositifs conformes à l'invention, les problèmes sont résolus automatiquement.

Comme on l'a déjà souligné, l'homme de l'art, sur la base des caractéristiques de la présente invention et du fait même de la souplesse des équipements qui en découlent, pourra trouver de très nombreuses applications dès lors qu'il faut une prise d'images et plus encore quant un automatisme utilise ces images comme base de travail.

## Revendications

1. Dispositif de commande d'un appareillage de prise d'images à capteurs optoélectroniques (CTD), intégrable dans une caméra ou un ensemble de caméras de prise d'images d'objets fixes ou mobiles, ces capteurs présentant au moins une zone de prise d'images, dite "d'intégration" (ZI), constituée d'éléments photosensibles et au moins une zone de mémoire et de lecture (ZL) recueillant les signaux émis par les éléments sensibles pour les mémoriser et/ou les traiter, caractérisé en ce qu'il comporte un ensemble logique (TTL), qui après réception depuis l'extérieur d'un ordre de prise d'image à un instant défini par un événement externe, commande le début d'une phase d'intégration ou d'exposition, asservit le temps d'exposition aux caractéristique: physiques de l'objet et, à la réception depuis l'extérieur d'un ordre de lecture à un instant défini par des moyens de traitement exiérieur de l'image, commande l'opération de lecture de ladite zone de mémoire à l'instant et au rythme définis par lesdits moyens de traitement.

2. Dispositif de commande selon la revendication 1, caractérisé en ce que lesdits moyens de traitement extérieur de l'image déclenchent ledit ordre de lecture à l'instant où ils sont prêts à recevoir une image ou un élément d'image.

3. Dispositif de commande selon la revendication 1, caractérisé en ce que lesdits moyens de traitement extérieur de l'image, afin de réaliser un traitement ou un affichage à une fréquence vidéo normalisée, déclenchent ledit ordre de lecture à un rythme régulier correspondant à ladite fréquence normalisée.

4. Dispositif de commande selon la revendication 1, caractérisé en ce que l'ensemble logique (TTL) commande, avant le début de la phase d'intégration, au moins une remise à zéro (RAZ) de la zone d'intégration.

5. Dispositif de commande selon l'une des revendications 1 à 4, caractérisé en ce que l'ensemble logique (TTL) commande au moins une remise à zéro de la zone de mémoire avant le transfert de la zone d'intégration vers ladite zone de mémoire.

6. Dispositif de commande selon l'une des revendications 1 à 5, caractérisé en ce que après l'arrét dudit ordre de lecture, l'ensemble logique (TTL) achève la lecture de la trame en cours.

7. Dispositif de commande selon l'une des revendications 1 à 6, caractérisé en ce qu'il est appliqué à la prise d'images au coup par coup.

8. Dispositif selon l'une des revendications 1 à 6, caractérisé en ce qu'il est appliqué à la prise d'images à déclenchement programmé.

9. Dispositif de commande d'appareillage de prise d'images selon les revendications 1 à 5, caractérisé en ce qu'il comporte un séquenceur d'états (SEQ) qui reçoit d'un part, un signal d'information (FI) de déclenchement de la prise d'image, d'autre part un signal de commande de lecture (CL), le premier de ces signaux étant défini par au moins un capteur d'état des objets, le second par les moyens de traitement de l'image.

10. Dispositif de commande selon les revendications 1 à 9, caractérisé en ce que le déclenchement de la prise d'image et de la lecture ainsi que la vitesse de lecture sont asservis à des fenêtres électroniques ou à des sous-échantillonnages.

11. Dispositif de commande selon les revendications 1 à 10, caractérisé en ce qu'il comporte sélectivement soit au moins un convertisseur analogique/numérique (CA/N) émettant directement pour chaque point élémentaire de l'image des signaux binaires, aptes à être mis en mémoire, traités, affichés, transmis, soit un circuit produisant une sortie vidéo composite.

12. Dispositif de commande selon les revendications 1 à 11, caractérisé en ce qu'il est appliqué à la commande de plusieurs appareillages de prise de vue à déclenchement simultané ou séquentiel de la prise de vue.

13. Dispositif selon la revendication 12, caractérisé en ce que la prise d'image est déclenchée simultanément sur plusieurs appareillages de prise de vue et en ce que la lecture desdits appareillages de prise de vue est déclenchée de façon séquentielle, à un instant défini par lesdits moyens de traitement extérieur de l'image.

14. Dispositif de commande d'appareillage de prise d'images selon la revendication 9, caractérisé en ce que ledit capteur d'état des objets est apte à indiquer que les objets à prendre en image sont en condition optimale.

15. Dispositif selon la revendication 14, caractérisé en ce que ledit capteur est sensible à la position des objets.

16. Dispositif selon la revendication 14, caractérisé en ce que ledit capteur est sensible à la cinématique des objets.

17. Dispositif de commande selon les revendications 1 à 16, caractérisé en ce que, pour chaque caméra, des impulsions de commande (FP, HEX) sont amenées d'une part à un compteur de points (CP) et, d'autre part, à l'une des entrées d'une première porte ET (ET1), le compteur de points (CP) étant suivi d'un premier comparateur (COMP.P) qui émet à chaque fin de zone de points vers de première part une entrée d'une seconde porte ET (ET2) et d'une troisième porte ET (ET3), de seconde part un compteur de zone de points (CL), et de troisième part un séquenceur d'états (SEQ), éventuellement commun à toutes les caméras, qui renvoie au compteur de points (CP) une impulsion de remise à zéro (RAZ) pour passage à la zone suivante, un second comparateur (COMP.L) informant le séquenceur d'état (SEQ) du transfert d'un certain nombre de zones et de l'ensemble de l'image, lequel remet à zéro (RAZ) le second comparateur (COMP.L).

18. Dispositif de commande d'appareillage de prise d'images selon la revendication 17, caractérisé en ce que les portes ET (ET1, ET2, ET3) reçoivent respectivement sur leur seconde entrée les signaux de validation, en provenance du premier comparateur (COMP.P) ce qui permet à la première porte (ET1) d'émettre les signaux de décalage de zone points du registre de lecture, en provenance du séquenceur (SEQ), ce qui permet à la seconde porte (ET2) d'émettre les signaux de décalage de zones image, et en provenance du séquenceur (SEQ), ce qui permet à la troisième porte (ET3) d'émettre les signaux de décalage de zones mémoire, l'ensemble des signaux émis par lesdites portes commandant l'ensemble de prise d'images à capteurs photosensibles.

## Claims

1. Device for controlling charge transfer device (CTD), photosensor image taking equipment capable of being integrated into a camera or a set of cameras for taking pictures of stationary or moving objects said photosensor including at least one image taking zone referred to as the integration zone (ZI) constituted by photosensitive elements and at least one memory and readout zone (ZL) receiving the signals delivered by the photosensitive elements in order to memorize and/or process them, characterized in that it includes a logic unit (TTL), which upon receiving an external triggering signal at an instant defined by an external event, commands the start of an integration or exposure phase, renders the time of exposure dependent upon the physical characteristics of the object, and upon receiving an external readout instruction at an instant defined by external image processing means, commands readout of said memory zone at an instant and at a rhythm defined by said image processing means.

2. Control device according to claim 1, characterized in that said external image processing means trigger said readout instruction at an instant in time at which they are ready to receive an image or a part thereof.

3. Control device according to claim 1, characterized in that said external image processing means, in order to achieve display or processing at a standardized video frequency, trigger said readout instruction at a regular rate that corresponds to said standardized frequency.

4. Control device according to claim 1, characterized in that the logic unit (TTL), prior to the start of the integration phase, commands at least one reset (RAZ) of the integration zone.

5. Control device according to one of claims 1 to 4, characterized in that the logic unit (TTL) commands at least one reset of the memory zone prior to the transfer of the integration zone to the said memory zone.

6. Control device according to one of claims 1 to 5, characterized in that after the disappearance of said readout instruction, the logic means (TTL) terminates readout of the current frame.

7. Control device according to one of claims 1 to 6, characterized in that it is applied to the taking of single shot images.

8. Device according to one of claims 1 to 6, characterized in that it is applied to the taking of images under stored program control.

9. Device for controlling image taking equipment according to claims 1 to 5, characterized in that it includes a state sequencer (SEQ) that receives, on the one hand, an information signal (FI) that triggers image taking, and on the other hand, a read command signal (CL), the first signal being defined by at least one sensor responsive to the state of objects, the second by the image processing means.

10. Device according to claims 1 to 9, characterized in that triggering of image taking and of readout and the readout rate are under the control of electronic windows or subsampling.

11. Device according to claims 1 to 10, characterized in that it selectively includes either at least one analog/digital converter (CA/N) directly delivering binary signals for each pixel of the image, said signals being suitable for storage in memory, processing, display, and transmission, or a circuit producing a composite video output.

12. Device according to claims 1 to 11, characterized in that it is applied to the control of several items of image taking equipment having simultaneous or sequential triggering of exposure.

13. Device according to claim 12, characterized in that exposure is triggered simultaneously on several items of image taking equipment and readout from said items of image taking equipment is triggered sequentially, at an instant defined by said external image processing means.

14. Control device according to claim 9, characterized in that said sensor responsive to the state of objects is adapted to indicate that the objects to be filmed are in an optimum condition.

15. Control device according to claim 14, characterized in that said sensor is responsive to the position of the objects.

16. Control device according to claim 14, characterized in that said sensor is responsive to movement of the objects.

17. Control device according to one of claims 1 to 16, characterized in that for each camera, command pulses (FP, HE) are brought to a dot counter (CP) and to one of the inputs of a first AND gate (ET1), the dot counter (CP) being followed by a first comparator (COMP.P) that issues signals at each dot zone end, on the one hand, to an input of a second AND gate (ET2) and a third AND gate (ET3), on the other hand, to a dot zone counter (CL), and furthermore to a state sequencer (SEQ), optionally common to all the cameras, that sends back to the dot counter (CP) a reset (RAZ) pulse for moving on to the following zone, a second comparator (COMP.L) informing the state sequencer (SEQ), of the transfer of a certain number of zones and of the whole of the image, which resets (RAZ) the second comparator (COMP.L).

18. Device for controlling image taking equipment according to claim 17, characterized in that the AND gates (ET1, ET2, ET3) respectively receive at their second input enabling signals, originating from said first comparator (COMP.P) thereby allowing the first gate (ET1) to issue shift signals for the dots zone of the readout register, issuing from the sequencer (SEQ), which allows the second gate (ET2) to issue image zone shift signals, and issuing from the sequencer (SEQ), which allows the third gate (ET3) to issue memory zone shift signals, the whole set of signals issued by the said gates controlling the whole of the photosensitive image taking device.

## Patentansprüche

1. Vorrichtung zum Steuern eines optoelektronische Sensoren (CTD) umfassenden, in einer Bildaufnahmekamera oder einem Satz Bildaufnahmekameras zur Aufnahme fester oder beweglicher Objekte integrierbaren Bildaufnahmegeräts, wobei die Sensoren wenigsten eine aus lichtempfindlichen Elementen zusammengesetzte Bildaufnahmezone, "Integrationszone" (ZI) genannt, darstellen, und wenigstens eine Speicherung- und Lesezone (ZL) die die von den lichtempfindlichen Elementen abgegebenen Signale zwecks Speicherung bzw. Behandlung aufnimmt, dadurch gekennzeichnet, dass sie eine Logikeinheit (TTL) enthält welche nach Empfang eines von aussen kommenden Bildaufnahmebefehls zu einem von einem äusseren Ereignis festgesetzten Zeitpunkt, den Anfang einer Integrationsphase oder Belichtungsphase steuert, die Belichtungszeit nach Massgabe der physischen Merkmale des Objekts reguliert und, bei Empfang eines von aussen kommenden Lesebefehls zu einem von externen Bildverarbeitungsmitteln bestimmten Zeitpunkt, den Lesevorgang des Speicherbereichs zu einem von den Verarbeitungsmitteln bestimmten Zeitpunkt und Rhythmus steuert.

2. Vorrichtung zum Steuern nach Anspruch 1, dadurch gekennzeichnet, dass die externen Bildverarbeitungsmittel den Lesebefehl zu dem Zeitpunkt antriggern, an dem sie zum Empfang eines Bildes oder eines Bildelementes bereit sind.

3. Vorrichtung zum Steuern nach Anspruch 1, dadurch gekennzeichnet, dass die externen Bildverarbeitungsmitiel, zur Realisierung einer Verarbeitung oder Anzeige bei einer normalisierten Videofrequenz, den Lesebefehl in einem regelmässigen, der normalisierten Frequenz entsprechenden Rhythmus antriggern.

4. Vorrichtung zum Steuern nach Anspruch 1, dadurch gekennzeichnet, dass die Logikeinheit (TTL) vor Beginn der Integrationsphase wenigstens eine Nullstellung (RAZ) der Integrationszone steuert.

5. Vorrichtung zum Steuern nach einem der Ansprüche 1 bis 4, dadurch gekennzeichnet, dass die Logikeinheit (TTL) vor der Übertragung der Integrationszone zu der Speicherungszone wenigstens eine Nullstellung der Speicherungszone steuert.

6. Vorrichtung zum Steuern nach einem der Ansprüche 1 bis 5, dadurch gekennzeichnet, dass nach Abschalten des Lesebefehls die Logikeinheit (TTL) das Ablesen des laufenden Einzelbildes beendet.

7. Vorrichtung zum Steuern nach einem der Ansprüche 1 bis 6, dadurch gekennzeichnet, dass sie zur intermittierenden Bildaufnahme angewandt wird.

8. Vorrichtungen zum Steuern nach einem der Ansprüche 1 bis 6, dadurch gekennzeichnet, dass sie zwecks vermittels eines Programms ausgelöster Bildaufnahme angewandt werden.

9. Vorrichtung zum Steuern eines Bildaufnahmegeräts nach den Ansprüchen 1 bis 5, dadurch gekennzeichnet, dass sie eine Zustandsfolgesteuerschaltung (SEQ) aufweist welche einerseits ein Informationssignal (FI) der Auslösung der Bildaufnahme, und andererseits ein Lesebefehlssignal (CL) empfängt, wobei ersteres durch wenigstens einen Sensor für den Zustand der Gegenstände und das zweite durch die Mittel zur Bildverarbeitung bestimmt wird.

10. Vorrichtung zum Steuern nach den Ansprüchen 1 bis 9, dadurch gekennzeichnet, dass die Auslösung der Bildaufnahme und der Lesung sowie die Lesegeschwindigkeit durch elektronische Fenster oder Teilabtastungen geregelt sind.

11. Vorrichtungen zum Steuern nach einem der Ansprüche 1 bis 10, dadurch gekennzeichnet, dass sie nach Wahl entweder wenigstens einen analog/digitalen Umwandler (CA/N) umfasst, der für jeden Elementarpunkt des Bildes Binärsignale direkt abgibt, welche geeignet sind, gespeichert, behandelt, angezeigt, übertragen zu werden, oder einen Schaltkreis welcher einen zusammengesetzten Bildausgang erzeugt.

12. Vorrichtung zum Steuern nach den Ansprüchen 1 bis 11, dadurch gekennzeichnet, dass sie zum Steuern mehrerer Bildaufnahmegeräte mit gleichzeitiger oder sequentieller Auslösung von Bildaufnahmen verwendet wird.

13. Vorrichtung nach Anspruch 12, dadurch gekennzeichnet, dass die Bildaufnahme gleichzeitig auf mehreren Bildaufnahmegeräten ausgelöst wird und dadurch, dass der Lesevorgang der Bildaufnahmegeräte nacheinander erfolgt, zu einem von den externen Bildverarbeitungsmitteln bestimmten Zeitpunkt.

14. Vorrichtung zum Steuern eines Bildaufnahmegeräts nach Anspruch 9, dadurch gekennzeichnet, dass der Sensor für den Zustand der Gegenstände fähig ist anzuzeigen, dass die auf Bild aufzunehmenden Gegenstände in optimaler Bedingung sind.

15. Vorrichtung nach Anspruch 14, dadurch gekennzeichnet, dass der Sensor im Bezug auf die Position der Gegenstände empfindlich ist.

16. Vorrichtung nach Anspruch 14, dadurch gekennzeichnet, dass der Sensor im Bezug auf die Kinematik der Gegenstände empfindlich ist.

17. Vorrichtung zum Steuern nach den Ansprüchen 1 bis 16, dadurch gekennzeichnet, dass für jede Kamera Steuerimpulse (FP, HEX) einerseits an einen Punktzähler (CP) und andererseits an einen der Eingänge eines ersten UND-Gatters (ET1) angebracht werden, wobei dem Punktzähler (CP) eine erste Vergleichsschaltung (COMP.P) nachgeschaltet ist, die am Ende jeder Punktzone einerseits an einen Eingang eines zweiten UND-Gatters (ET2) und eines dritten UND-Gatters (ET3) und andererseits an einen Punktzonenzähler (CL) und ferner an eine eventuell für alle Kameras gemeinsame Zustandsfolgesteuerschaltung (SEQ) überträgt, welch letztere an den Punktzähler (CP) einen Nullpunktrückstellungsimpuls (RAZ) zwecks Übergang auf die nachfolgende Zone abgibt, während eine zweite Vergleichsschaltung (COMP.L) der Zustandsfolgesteuerschaltung (SEQ) die Übermittlung einer bestimmten Anzahl von Punktzonen und die Übermittlung des gesamten Bildes meldet und die Zustandsfolgesteuerschaltung die zweite Vergleichsschaltung (COMP.L) auf den Nullpunkt (RAZ) zurückstellt.

18. Vorrichtung zum Steuern eines Bildaufnahmegeräts nach Anspruch 17, dadurch gekennzeichnet, dass die UND-Gatter (ET1, ET2, ET3) jeweils an ihrem zweiten Eingang die von der ersten Vergleichsschaltung (COMP.P) abgegebenen Bestätigungssignale empfangen, wodurch das erste Gatter (ET1) die die von der Zustandsfolgesteuerschaltung (SEQ) erzeugten Leseregister-Punktzonenversetzungs-Signale abgeben kann, so dass das zweite Gatter (ET2) die von der Zustandsfolgesteuerschaltung (SEQ) abgegebenen Signale bzw. die Bildzonenversetzungs-Signale abgeben kann, wodurch das dritte Gatter (ET3) befähigt wird, die Speicherzonenversetzungs-Signale abzugeben, wobei das Ganze der durch diese Gatter abgegebenen Signale den Bildaufnahmesatz mit lichtempfindlichen Sensoren steuert.

FIG.1

FIG.2

FIG.3

CA/N ← FP

OPT

CTD

TTL

SYN → SYN
→ SM
→ CLP

EP 0 222 641 B1

OPT

HD VD

CTD

TTL

SYN → SYN
→ SM
→ CLP

FP

ECH

CLP

SUP

γ

MS

AI

VC

FIG.4